# Europäisches Patentamt

# European Patent Office

# Office européen des brevets

(19)

(11) Veröffentlichungsnummer: **0 134 592**
**B1**

(12) **EUROPÄISCHE PATENTSCHRIFT**

(45) Veröffentlichungstag der Patentschrift:
07.12.88

(51) Int. Cl.⁴: **C 08 F 240/00, C 08 F 12/00,**
**C 08 F 6/00**

(21) Anmeldenummer: **84200620.7**

(22) Anmeldetag: **02.05.84**

(54) Säuremodifizierte, aromatische Kohlenwasserstoffharze und Verfahren zu ihrer Herstellung.

(30) Priorität: **09.07.83 DE 3324817**

(43) Veröffentlichungstag der Anmeldung:
**20.03.85 Patentblatt 85/12**

(45) Bekanntmachung des Hinweises auf die Patenterteilung:
**07.12.88 Patentblatt 88/49**

(84) Benannte Vertragsstaaten:
**DE FR GB IT NL**

(56) Entgegenhaltungen:
**GB-A- 624 792**
**GB-A- 634 570**

(73) Patentinhaber: **RÜTGERSWERKE**
**AKTIENGESELLSCHAFT, Mainzer Landstrasse 217,**
**D-6000 Frankfurt am Main 1 (DE)**

(72) Erfinder: **Lücke, Wolfgang, Stralsunder Strasse 13,**
**D-4200 Oberhausen 11 (DE)**
Erfinder: **Beneke, Herbert, Dr., Wartburgstrasse 97,**
**D-4620 Castrop-Rauxel (DE)**
Erfinder: **Friedrich, Bodo, Sommerstrasse 47,**
**D-4100 Duisburg 12 (DE)**

ACTORUM AG

# Beschreibung

Die Erfindung betrifft neue, aromatische Kohlenwasserstoffharze, die in wässrigen Basen löslich sind und die somit naturharzähnliche Eigenschaften besitzen. Derartige Harze finden eine vielseitige Verwendung z.B. in Druckfarben, in der Papierleimung oder in der Herstellung wässriger Leime oder wässriger Lacksysteme, Anwendungsgebieten, die bislang den Naturharzen vorbehalten sind.

Leider ist die Verfügbarkeit der Naturharze beschränkt. Ausserdem haben diese Harze gewisse Nachteile wie Empfindlichkeit gegen Luftoxidation oder UV-Bestrahlung. Die Harze vergilben leicht. Ausserdem haben sie, wie nahezu alle Naturprodukte, eine grosse Schwankungsbreite ihrer Qualitätsmerkmale, hauptsächlich bezüglich ihrer Farbe.

Man hat bereits Kohlenwasserstoffharze mit naturharzähnlichen Eigenschaften durch Copolymerisation von ungesättigten Kohlenwasserstoffen, wie z.B. Styrol, mit aliphatischen ungesättigten Carbonsäuren, vornehmlich mit Maleinsäure oder Maleinsäureanhydrid hergestellt. Diese Harze haben jedoch den Nachteil, dass sie nicht schmelzbar sind.

Es ist daher Aufgabe der Erfindung, schmelzbare Kohlenwasserstoffharze bereitzustellen, die in wässrigen Basen und in den meisten technisch gebräuchlichen Lösungsmitteln löslich sind, somit naturharzähnliche Eigenschaften besitzen, jedoch mit geringer Vergilbungsneigung und Empfindlichkeit gegen Luftoxidation und UV-Bestrahlung und die in gleichbleibender Qualität und Farbe hergestellt werden können.

Die Lösung der Aufgabe erfolgt durch die Harze und die Verfahren zu ihrer Herstellung gemäss der Ansprüche 1 bis 5.

Es wurde gefunden, dass aromatische Carbonsäuren bei der Polymerisation ungesättigter aromaticher Kohlenwasserstoffe mit in die Polymere eingebaut werden können und dass die dabei entstehenden Harze das gesuchte Eigenschaftsprofil haben.

Als aromatische Carbonsäure können eingesetzt werden z.B. o-, m- oder p-Toluyl-, Phenylessig-, Zimt-, Phenoxiessig-, oder Alkoxybenzoesäure. Insbesondere eignen sich aromatische Hydroxicarbonsäuren wie o-, m- oder p-Hydroxibenzoe- oder Hydroxinaphthoesäure, da die zusätzlichen Hydroxylgruppen zu einer Erhöhung der Hydrophilie der entsprechenden Harze führen.

Ungesättigte aromatische Verbindungen, die sich zur Herstellung der erfindungsgemässen Harze eignen, sind z.B. Inden, Styrol, α-Methylstyrol, Methylinden oder Vinyltoluol, die als Reinsubstanzen oder im Gemisch eingesetzt werden können.

Andere polymerisierbare, aromatische Kohlenwasserstoffgemische finden sich einerseits in den im Temperaturbereich von 140 bis etwa 220°C siedenden Destillaten aus Steinkohlenhochtemperaturteer, andererseits entstehen ungesättigte aromatische Kohlenwasserstoffe bei der Crakkung von Naphtha oder Gasöl sowie bei der Pyrolyse von Crackrückständen und sind in einer im Bereich von 160–220°C siedenden Fraktion, der sogenannten Harzölfraktion, angereichert. Diese Fraktionen enthalten als ungesättigte aromatische Verbindungen im wesentlichen Inden, Vinyltoluol, Methylinden, Cumaron, Dicylopentadien, Methyldicylopentadien, Styrol und α-Methylstyrol in einer Konzentration von 50 bis 70% neben nicht reaktiven aromatischen Verbindungen.

Die Mengenverhältnisse der Reaktionspartner liegen in folgenden Bereichen:
15–50 Gew.-%, vorzugsweise 35 Gew.-% aromatischen Carbonsäuren
85–50 Gew.-%, vorzugsweise 65 Gew.-% Kohlenwasserstoffe

Die Herstellung der Harze muss nach einem gegenüber der üblichen Kohlenwasserstoffharzherstellung geänderten Verfahren erfolgen.

So wird die aromatische Carbonsäure in einem diskontinuierlich betriebenen Rührgefäss vorgelegt und aufgeschmolzen. Die die aromatischen Carbonsäuren alle über 100°C schmelzen und teilweise sehr hohe Schmelzpunkte haben, ist es oft angebracht, nicht die reinen Säuren einzusetzen, sondern technische Produkte und Gemische von Säuren, deren Schmelzpunkte wesentlich erniedrigt sind. Zur geschmolzenen Säure werden unter Rühren etwa 10–30 Gew.-% (bezogen auf die eingesetzte Säuremenge) eines Friedel-Crafts-Katalysators wie etwa Bortrifluorid-Komplexe, Aluminium-, Antimon-V- oder Zinn-IV-Chlorid gegeben und danach innerhalb von 40 bis 80 min die ungesättigten, polymerisierbaren Verbindungen zudosiert, dass eine Reaktionstemperatur im Bereich von 100–160°C gehalten wird.

Nach Zugabe der ungesättigten Verbindungen erfolgt eine 10–20-minütige Nachreaktion bei der Polymerisationstemperatur. Danach wird das Reaktionsgemisch mit heissem Wasser gewaschen und damit nicht umgesetzte aromatische Carbonsäure und Katalysator entfernt. Das Wasser soll dabei eine Temperatur von mindestens 80°C haben. Das schonende Verfahren, das zugleich die beste Ausbeute des erfindungsgemässen Harzes bei bester Qualität ermöglicht, besteht darin, dass das Reaktionsgemisch mit einem mit Wasser nicht mischbaren, aber harzlöslichen Lösungsmittel wie etwa Toluol verdünnt und zur Abtrennung von Katalysator und nicht umgesetzter Säure mit mindestens 80°C heissem Wasser mehrmals extrahiert wird.

Die gelöste aromatische Säure kristallisiert beim Abkühlen des Wassers fast vollständig aus und kann so zurückgewonnen werden.

Nach dieser Extraktion wird die organische Lösung mit einer wässrigen Lösung von NaOH, KOH oder NH₃ behandelt. Dies ist notwendig, um das basenlösliche Kohlenwasserstoffharz von nicht gewünschtem, basenunlöslichem Kohlenwasserstoffharz-Nebenprodukt zu trennen. Das Kohlenwasserstoffharz löst sich in der wässrigen Phase, während das nicht säuremodifizierte Kohlenwasserstoffharz-Nebenprodukt im Lösungsmittel verbleibt. Die wässrige Phase wird daraufhin mit einer Mineralsäure angesäuert und das Harz ausgefällt und abgetrennt.

Auch hier kann eine optimale Harzqualität dadurch erhalten werden, dass die gereinigte, wässrige Phase im Volumenverhältnis 1:1 mit einem mit Wasser nicht mischbaren aber harzverträglichen Lösungsmittel gemischt und unter Rühren dann mit Schwefelsäure angesäuert wird. Dabei geht das basenlösliche Kohlenwasserstoffharz in die organische Phase über.

Die organische Phase wird abgetrennt und durch zweimalige Wasserwäsche gereinigt. Als letzter Verfahrensschritt folgt die Abdestillation des Lösungsmittels im Vakuum zur Gewinnung des basenlöslichen Kohlenwasserstoffharzes. Die so gewonnenen basenlöslichen Harze spalten beim Erhitzen (1 h bei 180–200 °C) $CO_2$ ab und werden dadurch basenunlöslich. Sie haben gute Haftung auf den verschiedensten Untergründen und sind in vielen organischen Lösungsmitteln löslich.

Beispiele

Beispiel 1

100 g o-Hydroxibenzoesäure werden in einem Rührgefäss vorgelegt und geschmolzen.

Dann werden 24,3 g $BF_3 \cdot 2H_2O$ zugetropft und innerhalb 45–60 min 188,5 g Styrol zugegeben. Die Reaktionstemperatur beträgt dabei 145 °C.

Danach wird das Reaktionsgemisch mit 300 ml Toluol gemischt und der Katalysator sowie nicht umgesetzte o-Hydroxibenzoesäure mit Wasser ausgewaschen.

Anschliessend wird das gewünschte Harz mit wässriger 20%iger Natronlauge extrahiert.

Zur Gewinnung des reinen Harzes wird es aus der Lösung mit Schwefelsäure ausgefällt, abgetrennt und getrocknet.

Ausbeuten:

219,5 g (76%) basenlösliches, säuremodifiziertes Kohlenwasserstoffharz
37,0 g (13%) Styrolharz-Nebenprodukt
25,5 g (9%) nicht umgesetzte o-Hydroxibenzoesäure
6,5 g (2%) Verlust

Harzeigenschaften:
Erweichungspunkt
(Krämer-Sarnow):       30–40 °C
Helligkeit:       B1/2
Säurezahl:       160–165
Lichtbeständigkeit:       kaum vergilbend
Löslichkeit:

Die so hergestellten Harze sind in folgenden Lösungsmitteln löslich: Toluol, Benzin, Cyclohexan, Aceton, Dioxan, Äthanol und wässrigem Alkali.

Einbrenntest:

Eine Probe des basenlöslichen Harzes wird 1 h bei 180 °C gehalten. Das danach erhaltene Harz hat folgende Eigenschaften:
Erweichungspunkt: 40–45 °C
Löslichkeit:

Die durch Erhitzen erhaltenen Harze sind in folgenden Lösungsmitteln löslich: Toluol, n-Hexan, Benzin, Cyclohexan, Aceton, Dioxan, Äthanol. In wässrigem Alkali sind sie unlöslich.
Gitterschnitt:

Die Haftung des eingebrannten Harzfilms auf Glas ist gut.

Eine Probe des basenlöslichen Harzes wird mit Basen neutralisiert.

$NH_3$     1 g neutralisiert 23,7 g Harz
NaOH     1 g neutralisiert 10,1 g Harz
KOH     1 g neutralisiert 7,2 g Harz
        (Basenüberschuss ist nicht erforderlich)
Erweichungspunkte des neutralisierten Harzes:
Neutralisiert mit   $NH_3$     45–55 °C
                NaOH     103–111 °C
                KOH     60–68 °C

Beispiel 2

100 g o-Hydroxibenzoesäure werden in einem Rührgefäss vorgelegt und geschmolzen. Dann werden 24,3 g $BF_3$-Katalysator zugetropft und innerhalb 60 min bei 150 °C 446,8 g Harzölfraktion (Siedebereich 140–220 °C) zugegeben und analog Beispiel 1 polymerisiert und aufgearbeitet.

Ausbeuten:

195,7 g basenunlösliches, säuremodifiziertes Kohlenwasserstoffharz
43,8 g Kohlenwasserstoffharz-Nebenprodukt
28,1 g nicht umgesetzte o-Hydroxibenzoesäure
Harzeigenschaften:
Erweichungspunkt
(Krämer-Sarnow):       45–55 °C
Helligkeit:       B3–B6
Säurezahl:       150–155
Löslichkeiten:       wie Beispiel 1

Beispiel 3

100 g Phenoxiessigsäure werden in einem Rührgefäss vorgelegt und geschmolzen.

Dann werden 21,7 g $BF \cdot 2H_2O$ zugetropft und innerhalb 45–60 min 194,5 g Styrol zugegeben. Die Reaktionstemperatur beträgt dabei 120 °C. Danach wird das Reaktionsgemisch mit 250 ml Toluol gemischt und der Katralysator sowie nicht umgesetzte Phenoxiessigsäure mit Wasser ausgewaschen.

Anschliessend wird das gewünschte Harz mit wässriger 20%iger Natronlauge extrahiert.

Zur Gewinnung des reinen Harzes wird es aus der Lösung mit Schwefelsäure ausgefällt, abgetrennt und getrocknet.
Ausbeuten:
249,4 g (84,7%) basenlösliches, säuremodifiziertes Kohlenwasserstoffharz
29,8 g (10,1%) Styrolharz-Nebenprodukt
11,0 g (3,7%) nicht umgesetzte Phenoxiessigsäure
4,3 g (1,5%) Verlust
Harzeigenschaften:
Erweichungspunkt
(Krämer-Sarnow):       35–45 °C
Helligkeit:       B 1
Säurezahl:       140–150
Lichtbeständigkeit:       kaum vergilbend
Löslichkeiten:       wie Beispiel 1

**Patentansprüche**

1. Mit aromatischen Carbonsäuren copolymerisierte aromatische Kohlenwasserstoffharze.

2. Verfahren zur Herstellung von mit aromartischen Carbonsäuren copolymerisierten aromatischen Kohlenwasserstoffharzen nach Anspruch 1, dadurch gekennzeichnet, dass bei 100–160 °C die aromatischen, ungesättigten Kohlenwasserstoffe zu einem Gemisch aus aufgeschmolzener aromatischer Carbonsäure und Friedel-Crafts-Katalysator zudosiert und polymerisiert werden und nach der Polymerisation das Reaktionsgemisch mit heissem Wasser gewaschen und die verbleibende organische Lösung mit einer wässrigen Lösung von NaOH, KOH oder NH$_3$ behandelt wird, wonach die wässrige Phase abgetrennt und aus ihr das gewünschte Harz durch Ansäuern freigesetzt wird.

3. Verfahren nach Anspruch 2, dadurch gekennzeichnet, dass die wässrige Phase vor der Neutralisation mit einem mit Wasser nicht mischbaren, aber harzverträglichen organischen Lösungsmittel versetzt wird und das gewünschte Harz beim Ansäuern in dem organischen Lösungsmittel gelöst wird.

4. Verfahren nach Anspruch 2 und 3, dadurch gekennzeichnet, dass als aromatischer, ungesättigter Kohlenwasserstoff Styrol eingesetzt wird.

5. Verfahren nach Anspruch 2 und 3, dadurch gekennzeichnet, dass als aromatische, ungesättigte Kohlenwasserstoffe eine im Temperaturbereich von 140–220 °C siedende Fraktion ungesättigter, aromatischer Kohlenwasserstoffe eingesetzt wird.

**Claims**

1. Aromatic hydrocarbon resins copolymerized with aromatic carboxylic acids.

2. A process for preparing aromatic hydrocarbon resins copolymerized with aromatic carboxylic acids according to Claim 1, characterized in that at 100 to 160 °C the aromatic, unsaturated hydrocarbons are added in a metered manner to make a mixture with melted-on aromatic carboxylic acid and Friedel-Crafts catalyst and is polymerized and after polymerization the reaction mixture is washed with hot water and the remaining organic solution is treated with an aqueous solution of NaOH, KOH or NH$_3$, after which the aqueous phase is separated and the desired resin is released therefrom by acidification.

3. A process according to Claim 2, characterized in that the aqueous phase is reacted before neutralization with an organic solvent which is immiscible with water but compatible with resin, and the desired resin is dissolved during the acidification in the organic solvent.

4. A process according to Claims 2 and 3, characterized in that the aromatic, unsaturated hydrocarbon used is in the form of styrene.

5. A process according to Claims 2 and 3, characterized in that the aromatic, unsaturated hydrocarbons used are in the form of a fraction of unsaturated aromatic hydrocarbons boiling in the temperature range of 140 to 22 °C.

**Revendications**

1. Résines d'hydrocarbures aromatiques copolymérisées avec des acides carboxyliques aromatiques.

2. Procédé de préparation de résines d'hydrocarbures aromatiques copolymérisées avec des acides carboxyliques aromatiques selon la revendication 1, caractérisé par le fait qu'à une température de 100–160 °C les hydrocarbures aromatiques insaturés sont ajoutés en quantités dosées à un mélange d'acide carboxylique aromatique fondu et d'un catalyseur Friedel-Crafts et polymérisés, le mélange réactionnel étant lavé à l'eau chaude après la polymérisation et la solution organique restante étant traitée à l'aide d'une solution aqueuse de NaOH, KOH ou NH$_3$, après quoi la phase aqueuse est séparée et la résine désirée est isolée à partir de celle-ci par acidification.

3. Procédé selon la revendication 2, caractérisé par le fait que la phase aqueuse est additionnée avant neutralisation d'un solvant organique non miscible à l'eau mais compatible avec les résines et que la résine désirée est dissoute dans le solvant organique au moment de l'acidification.

4. Procédé selon les revendications 2 et 3, caractérisé par le fait que du styrène est mis en œuvre en tant qu'hydrocarbure aromatique insaturé.

5. Procédé selon les revendications 2 et 3, caractérisé par le fait qu'à titre d'hydrocarbures aromatiques insaturés on met en œuvre une fraction d'hydrocarbures aromatiques insaturés bouillant dans la gamme de température de 140–220 °C.